Europäisches Patentamt

European Patent Office

Office européen des brevets

(11) Veröffentlichungsnummer: **0 023 944**

A2

(12) **EUROPÄISCHE PATENTANMELDUNG**

(21) Anmeldenummer: **80101002.6**

(22) Anmeldetag: **29.02.80**

(51) Int. Cl.³: **G 01 N 27/22**

(30) Priorität: **03.08.79 DE 2931588**

(43) Veröffentlichungstag der Anmeldung:
**18.02.81 Patentblatt 81/7**

(84) Benannte Vertragsstaaten:
**AT CH DE FR GB IT NL**

(71) Anmelder: **Felten & Guilleaume Carlswerk
Aktiengesellschaft
Schanzenstrasse 24 Postfach 80 50 01
D-5000 Köln 80(DE)**

(72) Erfinder: **Brüggendieck, Siegfried, Dipl.-Ing.
Amselweg 20
D-5608 Radevormwald(DE)**

(54) **Verfahren zur Feststellung von Feuchtigkeit in kunststoffisolierten Nachrichtenkabeln.**

(57) Die Erfindung betrifft ein Verfahren zur Feststellung von Feuchtigkeit in kunststoffisolierten Nachrichtenkabeln, wobei die Aufgabe besteht, auch geringe Feuchtigkeitsmengen feststellen zu können, die noch keinen Einfluß auf den Isolationswiderstand zwischen den Adern haben und durch die üblichen Fehlerortungsverfahren nicht feststellbar sind. Die Lösung dieser Aufgabe besteht darin, daß wenigstens zwei Messungen der Betriebskapazität zwischen zwei kunststoffisolierten Adern des zu überwachenden Kabels mit unterschiedlichen Meßfrequenzen durchgeführt werden und daß steigende Kapazitätswerte bei fallenden Meßfrequenzen als Anzeichen für eingedrungene Feuchtigkeit gewertet werden. Das Verfahren eignet sich vor allem für die Überwachung von ausgedehnten Kabelanlagen.

Fl 4523                                    1                          02.08.79

Verfahren zur Feststellung von Feuchtigkeit in kunststoffisolierten Nachrichtenkabeln

---

Die Erfindung betrifft ein Verfahren zur Feststellung von
Feuchtigkeit in kunststoffisolierten Nachrichtenkabeln.

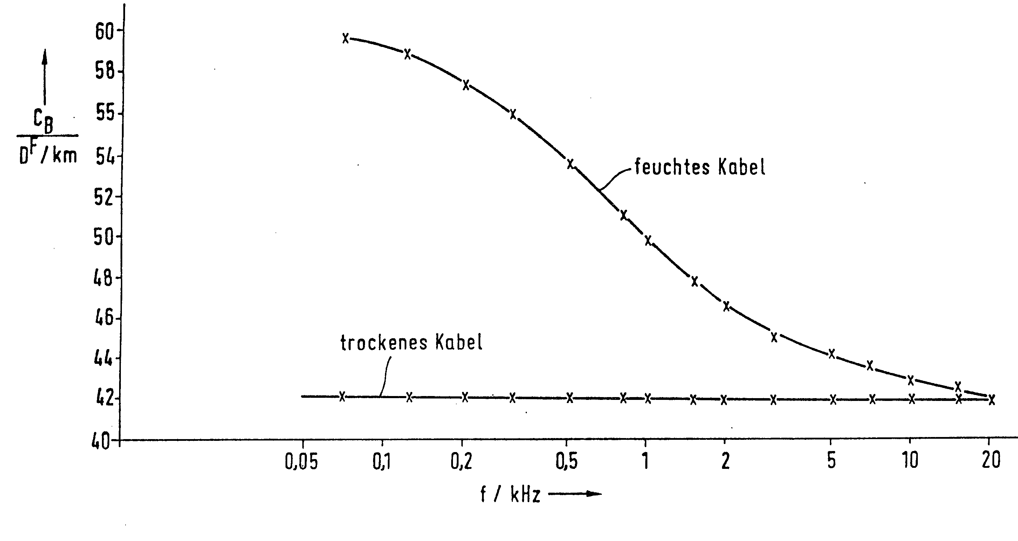

Es ist aus der Theorie seit langem bekannt, daß die
Dielektrizitätskonstante diverser Isolierstoffe als komplexe Größe anzusehen ist, also frequenzabhängig ist. Insbesondere für Kondensatoren mit geschichteten Isolierstoffen ergibt sich daraus, daß ihre Kapazität von der verwendeten Meßfrequenz abhängig ist (Dr. Andreas Gemant:
Elektrophysik der Isolierstoffe, Springer-Verlag Berlin,
1930, S. 101-103, insbesondere Abb. 42).

Eine Anwendung dieser Erkenntnisse auf die Kabelmeßtechnik
ist bisher nicht bekannt geworden. Beispielsweise zeigt
auch die Betriebskapazität zwischen zwei kunststoffisolierten Adern eines Nachrichtenkabels im einwandfreien Zustand,
also bei trockenem Kabel, innerhalb des Bereiches der für
diesen Zweck normalerweise verwendeten Meßfrequenz keine
Frequenzabhängigkeit.

Überraschenderweise wurde nun gefunden, daß die theoretische Frequenzabhängigkeit der Dielektrizitätskonstante geschichteter Isolierstoffe bei den genannten Kabeln deutlich meßbar wird, sobald sich geringe Feuchtigkeitsmengen im Kabel befinden. Diese Erscheinung tritt bereits bei Feuchtigkeitsmengen auf, die auch bei einem geöffneten Kabel optisch noch nicht feststellbar sind, noch keinen Einfluß auf den Isolationswiderstand zwischen den Adern haben und auch durch die üblichen Fehlerortungsverfahren nicht feststellbar sind.

Der Erfindung liegt die Aufgabe zugrunde, ein Verfahren zur Feststellung geringer Feuchtigkeitsmengen in kunststoffisolierten Nachrichtenkabeln anzugeben. Diese Aufgabe wird erfindungsgemäß dadurch gelöst, daß wenigstens zwei Messungen der Betriebskapazität $C_B$ zwischen zwei kunststoffisolierten Adern des zu überwachenden Kabels mit unterschiedlichen Meßfrequenzen durchgeführt werden und daß steigende Kapazitätswerte bei fallenden Meßfrequenzen als Anzeichen für eingedrungene Feuchtigkeit gewertet werden.

Ausgestaltungen der Erfindung sind in den Unteransprüchen 2-3 angegeben.

Die mit der Erfindung erzielbaren Vorteile bestehen insbesondere darin, daß Nachrichtenkabel mit kunststoffisolierten Adern mit der Erfindung leicht überwacht werden können, daß eindringende Feuchtigkeit frühzeitig erkannt, die Fehlerstelle gesucht und beseitigt werden kann, lange bevor Betriebsstörungen an solchen Kabeln auftreten.

Ein Beispiel einer Messung gemäß der Erfindung ist in der Zeichnung dargestellt und wird im folgenden näher beschrieben.

In der einzigen Figur ist ein Diagramm dargestellt, in dem auf der Abszisse Meßfrequenzen in logarithmischem Maßstab aufgetragen sind, während auf der Ordinate die Betriebskapazität $C_B$ in Nanofarad/km (nF/km) angegeben ist. Die Meßergebnisse bei einem trockenen Kabel zeigen eine Betriebskapazität von 42 nF/km unabhängig von der Meßfrequenz. Die Kapazitätswerte für ein feuchtes Kabel steigen bei Meßfrequenzen unterhalb von 10 kHz deutlich an und erreichen bei einer Meßfrequenz von 75 Hz einen Wert von 59,5 nF/km. Das entspricht einer Zunahme um mehr als 40 % des ursprünglichen Wertes. Der Kurvenverlauf der Betriebskapazität eines feuchten Kabels ist zwischen der Meßfrequenz von 1 kHz und der Meßfrequenz von 100 Hz so steil, daß auch ohne Kenntnis des ursprünglichen Wertes beim trockenen Kabel aus dem Unterschied der Meßwerte eindeutig auf das Vorhandensein von Feuchtigkeit im Kabel geschlossen werden kann.

Fl 4523                    1                    02.08.79

Patentansprüche:

1. Verfahren zur Feststellung von Feuchtigkeit in kunststoffisolierten Nachrichtenkabeln, d a d u r c h
   g e k e n n z e i c h n e t, daß wenigstens zwei
   Messungen der Betriebskapazität $C_B$ zwischen zwei
   kunststoffisolierten Adern des zu überwachenden
   Kabels mit unterschiedlichen Meßfrequenzen durchgeführt werden und daß steigende Kapazitätswerte bei
   fallenden Meßfrequenzen als Anzeichen für eingedrungene Feuchtigkeit gewertet werden.

2. Verfahren nach Anspruch 1, d a d u r c h
   g e k e n n z e i c h n e t, daß die Meßfrequenzen
   um einen Faktor zwischen 5 und 100, vorzugsweise um
   den Faktor 10, geändert werden.

3. Verfahren nach Anspruch 2, d a d u r c h
   g e k e n n z e i c h n e t, daß die Meßfrequenzen
   100 Hz und 1000 Hz betragen.